# EUROPEAN PATENT SPECIFICATION

(11) **EP 2 763 329 B1**
(45) Date of publication and mention of the grant of the patent: **25.04.2018**
(21) Application number: 11873478.9
(22) Date of filing: 27.09.2011
(51) Int. Cl.: H04B 7/08, H04B 7/0413

(54) **SIGNAL DETECTION METHOD AND SYSTEM**
SIGNALERKENNUNGSVERFAHREN UND SYSTEM
PROCÉDÉ ET SYSTÈME DE DÉTECTION DE SIGNAUX

(43) Date of publication of application: 06.08.2014
(73) Proprietor: Sanechips Technology Co., Ltd., Shenzhen, Guangdong 518055 (CN)
(72) Inventor: YOU, Yueyi, Shenzhen Guangdong 518057 (CN)
(74) Representative: Lavoix
(86) International application number: PCT/CN2011/080243
(87) International publication number: WO 2013/044453

(56) References cited:
- EP-A1- 2 352 245
- WO-A1-2011/104140
- WO-A2-2008/098092
- CN-A- 101 465 717

## Description

### TECHNICAL FIELD

The disclosure relates to the field of communications, and in particular to a signal detection method and system.

### BACKGROUND

A Software Defined Radio (SDR) vector processor is a universal communication platform. Based on such a relatively universal hardware, different communication functions may be implemented by loading different softwares. By using the vector processor, channel access or modulation method may be changed rapidly, and different communication standards may be adapted to by using different softwares, then a multimode mobile phone with high flexibility and a multifunctional base station may be constituted so that intercommunication between different communication systems can be implemented.

The 3rd Generation Partnership Project (3GPP) Long Term Evolution (LTE) is the most popular next generation mobile communication technology. Compared with the 3^{rd} generation mobile communication technology, the communication rate of LTE is improved substantially at the price of greatly-added complexity of implementation. A conventional scalar Digital Signal Processor (DSP) has become difficult to meet requirements of calculation amount of LTE. Therefore, at present, many companies begin to research and develop a vector processor to cope with needs of increasing calculation amount in the future.

At present, a common LTE signal detection method includes: channel estimation is performed on a receiving sequence, then Resource Element (RE) de-mapping processing is performed and valid data and their corresponding channel coefficients are extracted, finally Multiple-Input Multiple-Output detection is performed only on the valid data and their corresponding channel coefficients, so as to acquire a detected signal. When the RE de-mapping processing is performed, REs have to be judged one after another to see whether they are valid data, and the valid data and their corresponding channel coefficients are combined to facilitate the subsequent MIMO detection processing.

The disadvantages of the above processing method lie in: when the RE de-mapping processing is performed, REs have to be judged one after another, and for a typical 4-transmit 2-receive LTE system, channel coefficients between eight pairs of antennas in addition to data of 2 receiving antennas need to be extracted, resulting in a huge amount of serial operations, which are not suitable for vector processing.

WO 2008/098092 A2 discloses techniques for sending a MIMO transmission using combination of cyclic delay diversity and precoding. A set of delays (e.g., zero delay, small delay, and large delay) for cyclic delay diversity and a set of precoding matrices may be supported. In one design, a Node B may select a delay specifically for a UE or for a set of UEs served by the Node B. In another design, a UE may evaluate different combinations of precoding matrix and delay, determine the combination with the best performance, and send this combination of precoding matrix and delay to the Node B. The Node B may perform precoding with the precoding matrix and then processing for cyclic delay diversity based on the selected delay. Alternatively, the Node B may perform processing for cyclic delay diversity based on the selected delay and then precoding with the precoding matrix.

### SUMMARY

In view of the above, the disclosure is intended to provide a signal detection method and system, so as to lower complexity of Resource Element (RE) de-mapping processing.

To this end, the technical solutions of the disclosure are implemented as follows.

A signal detection method in a Long Term Evolution, LTE system, including:
after channel estimation is completed, Multiple-Input Multiple-Output (MIMO) detection is performed, then RE de-mapping is performed;
wherein after the channel estimation is completed, before the MIMO detection is performed, it is judged whether physical Resource Block (RB) de-mapping is performed;
wherein the judgement method may include:
   number M of RBs assigned to a user is compared with a predetermined threshold th, and the RB de-mapping is activated if the number M of RBs is smaller than the threshold th; and/or
   it is determined, according to a dispersion degree of the RBs assigned to the user, whether the RB de-mapping is activated;
wherein when the RB de-mapping is performed, de-mapping of channel coefficients and data are processed by judging and extracting all the RBs one after another.

Wherein the process of the RE de-mapping may include:
valid data are extracted by removing a reference signal, a primary synchronization signal and a Physical Broadcasting Channel, PBCH from an MIMO detected signal, and valid data of a user are combined together.

A Long Term Evolution, LTE signal detection system, including a channel estimation unit, an MIMO detection unit and an RE de-mapping unit, wherein
the MIMO detection unit is configured to perform MIMO detection after channel estimation is completed by the channel estimation unit; and
the RE de-mapping unit is configured to perform RE de-mapping after the MIMO detection is completed by the MIMO detection unit;
wherein the system may further include an RB de-mapping unit configured to judge whether RB de-mapping is performed after the channel estimation is completed and before the MIMO detection is performed;
wherein when performing the judgement, the RB de-mapping unit is configured to:
compare number M of RBs assigned to a user with a predetermined threshold th, and activate the RB de-mapping if the number M of RBs is smaller than the threshold th; and/or
determine, according to a dispersion degree of the RBs assigned to the user, whether the RB de-mapping is activated;
wherein when performing the RB de-mapping, the RB de-mapping unit is configured to process de-mapping of channel coefficients and data by judging and extracting all the RBs one after another.

Wherein when performing the RE de-mapping, the RE de-mapping unit is configured to:
extract valid data by removing a reference signal, a primary synchronization signal and a Physical Broadcasting Channel, PBCH from an MIMO detected signal, and combine together valid data of a user.

It can be seen that the signal detection method and system according to the disclosure, by taking advantage of the feature that number of paths of output data of
MIMO detection is much smaller than that of its input data, do not extract valid data and their corresponding channel coefficients immediately after channel estimation is performed, instead, the MIMO detection is performed, then RE de-mapping is performed, and thereby the complexity of the RE de-mapping is lowered substantially.

### BRIEF DESCRIPTION OF THE DRAWINGS

Fig. 1 is a schematic diagram of signal detection according to an embodiment of the present disclosure; and
Fig. 2 is a schematic diagram of physical RB de-mapping according to an embodiment of the present disclosure.

### DETAILED DESCRIPTION

In practical applications, by taking advantage of the feature that number of paths of output data of MIMO detection is much smaller than that of its input data, valid data and their corresponding channel coefficients may not be extracted immediately after channel estimation is performed, instead, the MIMO detection is performed, then RE de-mapping is performed, thereby the complexity of the RE de-mapping is lowered substantially.

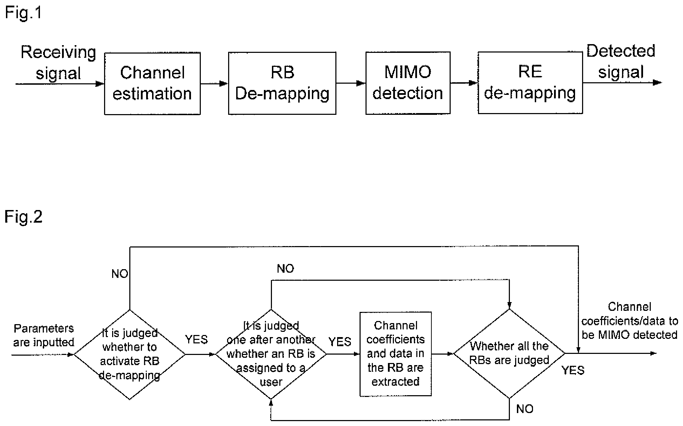

For example, referring to the operation principle as shown in Fig. 1, the following steps may be implemented:
Step 1: Channel estimation is performed to acquire channel coefficients of all antenna pairs.
Step 2: RB de-mapping is performed.

It should be noted that the RB de-mapping is an optional operation. Before the RB de-mapping is performed, it may be judged whether to activate the RB de-mapping according to the RBs assigned to a user.

A preferred judgement method includes: comparing number M of RBs assigned to a user with a predetermined threshold th, and activating the RB de-mapping if the number M of RBs is smaller than the threshold th. The threshold th may be acquired according to different system bandwidth estimation complexities.

Another preferred judgement method includes determining whether the RB de-mapping is activated according to a dispersion degree of the RBs assigned to the user.

Certainly, the above two methods may be combined to judge whether to activate the RB de-mapping.

After that, the RB de-mapping may be performed respectively on the channel coefficients and data.

If there are valid data of a user in a certain RB, data and their channel coefficients corresponding to all REs in the RB are all outputted so that MIMO detection will be performed.

Step 3: The MIMO detection is performed.

According to acquired data and their channel coefficients after the RB de-mapping, an MIMO detected signal corresponding to each RE in the RB is calculated.

Step 4: RE de-mapping is performed on the MIMO detected signal.

The RE de-mapping includes: extracting valid data from the MIMO detected signal, i.e., removing a reference signal, a primary synchronization signal, a Physical Broadcasting Channel (PBCH) and the like, and combining together valid data of a user.

It should be noted that the above channel estimation operation may be implemented by a channel estimation unit, the RB de-mapping operation may be implemented by an RB de-mapping unit, the MIMO detection operation may be implemented by an MIMO detection unit, and the RE de-mapping operation may be implemented by an RE de-mapping unit. The channel estimation unit, the MIMO detection unit and the RE de-mapping unit may be connected in sequence to constitute a signal detection system according to the disclosure. Moreover, the system may further include the RB de-mapping unit connected between the channel estimation unit and the MIMO detection unit. Due to the adding of the RB de-mapping module, the complexity of the RE de-mapping may be further lowered substantially by proper control of the complexity of the MIMO detection. In addition, it is very convenient to perform MIMO detection through vector processing, thus a substantial lowering of the complexity of the RE de-mapping may be acquired at the cost of an increase of the complexity of the MIMO detection.

Referring to Fig. 2, Fig. 2 illustrates the implementation process of the RB de-mapping. Firstly, it may be judged whether the RB de-mapping is activated, and if the RB de-mapping is activated, de-mapping processing of channel coefficients and data is performed, otherwise proceed directly to the MIMO detection. For the de-mapping processing of the channel coefficients and data, a method of judging and extracting all RBs one after another is adopted. For example, it is judged one after another whether an RB is assigned to a user, and if the judgement result is Yes, the channel coefficients and data in the RB are extracted, and then it is determined whether all the RBs are judged; otherwise, it is determined directly whether all the RBs are judged. If it is determined that all the RBs are judged, channel coefficients/data to be MIMO detected are outputted so that subsequent MIMO detection will be performed; if not all the RBs are determined, the step for judging one after another whether an RB is assigned to a user is implemented.

After the operations shown in Fig. 1 and Fig. 2 are completed, comparison results, as shown in Table 1, between cycles according to the disclosure and those according to a commonly-used method are acquired. It is assumed that the vector processor adopts a 32 Multiply-Accumulator (MAC) and the MIMO detection adopts a typical Minimum Mean Square Error MMSE) algorithm, then performing MIMO detection processing on each RE needs four cycles, and the total number of cycles is only 38% of that of the commonly-used method. It can be seen that the disclosure lowers substantially the complexity of the RE de-mapping.

| | Commonly-used method | The disclosure |
|---|---|---|
| MIMO detection (cycle) | 320 | 480 |
| RE de-mapping (cycle) | 1800 | 340 |
| Total (cycle) | 2120 | 820 |

The following example is not part of the claimed invention. In practical applications, in LTE, each Orthogonal Frequency Division Multiplexing (OFDM) symbol in one RB includes 12 REs. 4×2 MIMO two-layer open-loop spatial multiplexing, a system bandwidth of 3 MHz, and an OFDM symbol to be detected being a symbol including a reference signal are taken as an example to explain the specific steps of the disclosure. There are 15 RBs in 3 MHz, and it is assumed that the first 10 RBs are assigned to a user. Then, the following steps may be implemented:
Step 1: Channel estimation is performed to acquire channel coefficients of all antenna pairs, i.e., 8-path channel coefficients.
Step 2: RB de-mapping is performed.

It is assumed that the judgement activation threshold is set to 60% of the system bandwidth, i.e., th=60%*15=9. The number M of RBs assigned to a user meets M=10>th, then the RB de-mapping is activated.

All the RBs are judged to determine whether an RB is assigned to a user, if it is determined that the RB is assigned to the user, channel coefficients and data are extracted.

Step 3: MIMO detection is performed.

The extracted 8-path channel coefficients and 2-path data of the first 10 valid RBs are regarded as input data of the MIMO detection, then 2-path MIMO detected output data of MIMO detection are acquired.

Step 4: RE de-mapping is performed.

Valid data are extracted from the 2-path MIMO detected output data, i.e., removing a reference signal, a primary synchronization signal, a PBCH and the like, and combining together valid data of a user.

To sum up, it can be seen that regardless of the method or the system, by taking full advantage of the feature that number of paths of output data of MIMO detection module is much smaller than that of its input data, the signal detection technique according to the disclosure can lower substantially the complexity of the RE de-mapping through adjusting the sequence of the MIMO detection and the RE de-mapping.

## Claims

1. A signal detection method in a Long Term Evolution (LTE) system, comprising:
after channel estimation is completed, performing Multiple-Input Multiple-Output (MIMO) detection, then performing Resource Element (RE) de-mapping;
wherein after the channel estimation is completed, before the MIMO detection is performed, judging whether physical Resource Block (RB) de-mapping is to be performed, wherein the judging step comprises: comparing number M of RBs assigned to a user with a predetermined threshold th, and activating the RB de-mapping if the number M of RBs is smaller than the threshold th, and/or determining, according to a dispersion degree of the RBs assigned to the user, whether to activate the RB de-mapping; and,
when the RB de-mapping is performed, processing de-mapping of channel coefficients and data by judging and extracting all the RBs one after another.

2. The method according to claim 1, wherein the process of the RE de-mapping comprises:
extracting valid data by removing a reference signal, a primary synchronization signal and a Physical Broadcasting Channel (PBCH) from the MIMO detected signal, and combining together valid data of a user.

3. A Long Term Evolution (LTE) signal detection system, comprising a channel estimation unit, an MIMO detection unit, an RE de-mapping unit and an RB de-mapping unit, wherein
the MIMO detection unit is configured to perform MIMO detection after channel estimation is completed by the channel estimation unit;
the RE de-mapping unit is configured to perform RE de-mapping after the MIMO detection is completed by the MIMO detection unit; and
the RB de-mapping unit is configured to judge whether to perform RB de-mapping after the channel estimation is completed and before the MIMO detection is performed;
wherein, when performing the judgement, the RB de-mapping unit is configured to:
compare number M of RBs assigned to a user with a predetermined threshold th, and activate the RB de-mapping if the number M of RBs is smaller than the threshold th, and/or
determine, according to a dispersion degree of the RBs assigned to the user, whether to activate the RB de-mapping; and
wherein, when performing the RB de-mapping, the RB de-mapping unit is configured to process de-mapping of channel coefficients and data by judging and extracting all the RBs one after another.

4. The system according to claim 3, wherein, when performing the RE de-mapping, the RE de-mapping unit is configured to:
extract valid data by removing a reference signal, a primary synchronization signal and a Physical Broadcasting Channel (PBCH) from the MIMO detected signal, and combine together valid data of a user.

## Patentansprüche

1. Signalerkennungsverfahren in einem LTE-(Long Term Evolution)-System, Folgendes umfassend:
nachdem eine Kanalschätzung abgeschlossen ist, Ausführen einer MIMO-(Multiple Input Multiple Output)-Erkennung, danach Ausführen einer Ressourcenelement-(RE)-Rückabbildung,
wobei nach dem Abschluss der Kanalschätzung und vor dem Ausführen der MINO-Erkennung ein Bewerten erfolgt, ob ein Rückabbilden physischer Ressourcenblöcke (RB) auszuführen ist, wobei der Bewertungsschritt Folgendes umfasst: Vergleichen einer Anzahl M von RBs, die einem Benutzer zugewiesen sind, mit einem festgelegten Grenzwert th und Aktivieren des RB-Rückabbildens, wenn die Anzahl M an RBs kleiner als der Grenzwert th ist, und/oder bestimmen, ob das RB-Rückabbilden zu aktivieren ist, gemäß einem Verteilungsgrad der dem Benutzer zugewiesenen RBs und
wenn das RB-Rückabbilden ausgeführt wird, Verarbeiten des Rückabbildens von Kanalkoeffizienten und Daten durch Bewerten und Extrahieren aller RBs nacheinander.

2. Verfahren nach Anspruch 1, wobei das Verfahren des RB-Rückabbildens Folgendes umfasst:
Extrahieren gültiger Daten durch Entfernen eines Referenzsignals, eines primären Synchronisationssignals und eines PBCH (Physical Broadcasting Channel) aus dem MIMO-erkannten Signal und Kombinieren desselben mit gültigen Daten eines Benutzers.

3. LTE-Signalerkennungssystem, eine Kanalschätzungseinheit, eine MIMO-Erkennungseinheit, eine RE-Rückabbildungseinheit und eine RB-Rückabbildungseinheit umfassend, wobei:
die MIMO-Erkennungseinheit dafür konfiguriert ist, nach Abschluss der Kanalschätzung durch die Kanalschätzungseinheit eine MIMO-Erkennung auszuführen,
die RE-Rückabbildungseinheit dafür konfiguriert ist, nach Abschluss der MIMO-Erkennung durch die MIMO-Erkennungseinheit eine RE-Rückabbildung auszuführen, und
die RB-Rückabbildungseinheit dafür konfiguriert ist zu bewerten, ob das RB-Rückabbilden auszuführen ist, nachdem die Kanalschätzung abgeschlossen ist und bevor die MIMO-Erkennung ausgeführt wird,
wobei die RB-Rückabbildungseinheit beim Ausführen der Bewertung für Folgendes konfiguriert ist:
Vergleichen der Anzahl M an RBs, die einem Benutzer zugewiesen sind, mit einem festgelegten Grenzwert th und Aktivieren des RB-Rückabbildens, wenn die Anzahl M an RBs kleiner als der Grenzwert th ist, und/oder
Bestimmen, ob das RB-Rückabbilden zu aktivieren ist, gemäß einem Verteilungsgrad der dem Benutzer zugewiesenen RBs und
wobei, wenn das RB-Rückabbilden ausgeführt wird, die RB-Rückabbildungseinheit dafür konfiguriert ist, das Rückabbilden von Kanalkoeffizienten und Daten durch Bewerten und Extrahieren aller RBs nacheinander zu verarbeiten.

4. System nach Anspruch 3, wobei die RE-Rückabbildungseinheit bei Ausführen des RE-Rückabbildens für Folgendes konfiguriert ist:
Extrahieren gültiger Daten durch Entfernen eines Referenzsignals, eines primären Synchronisationssignals und eines PBCH (Physical Broadcasting Channel) aus dem MIMO-erkannten Signal und Kombinieren desselben mit gültigen Daten eines Benutzers.

## Revendications

1. Procédé de détection de signaux dans un système de technologie d'évolution à long terme (LTE), comprenant les étapes ci-dessous consistant à :
suite à l'achèvement d'une estimation de canal, mettre en oeuvre une détection de type « entrée multiple, sortie multiple » (MIMO), et mettre ensuite en oeuvre un démappage d'éléments de ressources (RE) ;
dans lequel, dès lors que l'estimation de canal est achevée, avant que la détection MIMO ne soit mise en oeuvre, déterminer si un démappage de blocs de ressources physiques (RB) doit être mis en oeuvre, dans lequel l'étape de détermination comprend les étapes consistant à : comparer un nombre « M » de blocs RB affectés à un utilisateur à un seuil « th » prédéterminé, et activer le démappage de blocs RB si le nombre « M » de blocs RB est inférieur au seuil « th », et/ou déterminer, selon un degré de dispersion des blocs RB affectés à l'utilisateur, s'il convient d'activer le démappage de blocs RB ; et
lorsque le démappage de blocs RB est mis en oeuvre, traiter un démappage de coefficients de canal et de données, en déterminant et en extrayant tous les blocs RB les uns après les autres.

2. Procédé selon la revendication 1, dans lequel le processus du démappage d'éléments RE comprend les étapes ci-dessous consistant à :
extraire des données valides en supprimant un signal de référence, un signal de synchronisation primaire et un canal de radiodiffusion physique (PBCH) du signal détecté par la technique MIMO ; et
combiner ensemble des données valides d'un utilisateur.

3. Système de détection de signaux de technologie d'évolution à long terme (LTE), comprenant une unité d'estimation de canal, une unité de détection MIMO, une unité de démappage d'éléments RE et une unité de démappage de blocs RB, dans lequel :
l'unité de détection MIMO est configurée de manière à mettre en oeuvre la détection MIMO dès lors que l'estimation de canal est achevée par l'unité d'estimation de canal ;
l'unité de démappage d'éléments RE est configurée de manière à mettre en oeuvre le démappage d'éléments RE dès lors que la détection MIMO est achevée par l'unité de détection MIMO ; et
l'unité de démappage de blocs RB est configurée de manière à déterminer s'il convient de mettre en oeuvre le démappage de blocs RB, dès lors que l'estimation de canal est achevée et avant que la détection MIMO ne soit mise en oeuvre;
dans lequel, lors de la mise en oeuvre de la détermination, l'unité de démappage de blocs RB est configurée de manière à :
comparer un nombre « M » de blocs RB affectés à un utilisateur à un seuil « th » prédéterminé, et activer le démappage de blocs RB si le nombre « M » de blocs RB est inférieur au seuil « th » ; et/ou
déterminer, selon un degré de dispersion des blocs RB affectés à l'utilisateur, s'il convient d'activer le démappage de blocs RB ; et
dans lequel, lors de la mise en oeuvre du démappage de blocs RB, l'unité de démappage de blocs RB est configurée de manière à traiter un démappage de coefficients de canal et de données, en déterminant et en extrayant tous les blocs RB les uns après les autres.

4. Système selon la revendication 3, dans lequel, lors de la mise en oeuvre du démappage d'éléments RE, l'unité de démappage d'éléments RE est configurée de manière à :
extraire des données valides en supprimant un signal de référence, un signal de synchronisation primaire et un canal de radiodiffusion physique (PBCH) du signal détecté par la technique MIMO ; et
combiner ensemble des données valides d'un utilisateur.
